# EUROPÄISCHE PATENTSCHRIFT

(11) **EP 3 817 626 B1**
(45) Veröffentlichungstag und Bekanntmachung des Hinweises auf die Patenterteilung: **27.03.2024**
(21) Anmeldenummer: 19726562.2
(22) Anmeldetag: 09.05.2019
(51) Int. Cl.: A47B 96/02, B65G 1/02

(54) **PRESSROST**
PRESS-LOCKED GRATING
GRILLE

(30) Priorität: 06.07.2018 DE 202018103893 U
(43) Veröffentlichungstag der Anmeldung: 12.05.2021
(73) Patentinhaber: Gebrüder Meiser GmbH, 66839 Schmelz (DE)
(72) Erfinder: MEISER, Wolfgang, 66119 Saarbrücken (DE)
(74) Vertreter: Patentanwaltskanzlei Vièl & Wieske PartGmbB
(86) Internationale Anmeldenummer: PCT/DE2019/100420
(87) Internationale Veröffentlichungsnummer: WO 2020/007390

(56) Entgegenhaltungen:
- EP-A1- 1 457 618
- DE-U1-202009 015 918
- DE-U1-202016 104 526
- DE-U1-202017 103 028

## Beschreibung

Die vorliegende Erfindung betrifft einen Preßrost, insbesondere für die Verwendung als Fachboden für Plattenregale oder Schwerlastregale, mit zwei Längsseiten und zwischen den Längsseiten angeordneten Querträgern und Längsträgern, wobei die Querträger und die Längsträger ein I-förmiges Profil aufweisen, wobei die Längsträger in zur Oberseite des Preßrostes offenen Stanzungen der Querträger eingesteckt oder eingepresst sind, wobei die Längsträger und die Querträger zueinander rechtwinklig angeordnet sind, und wobei die Längsseiten im Querschnitt als Profil ausgebildet sind, wobei das Profil der Längsseiten wenigstens einen ersten Schenkel und einen im Wesentlichen rechtwinklig zum ersten Schenkel angeordneten zweiten Schenkel umfasst, wobei jeder der Querträger an jedem Ende eine Stanzung aufweist, in welcher der erste Schenkel des Profils der Längsseiten angeordnet ist und über ein Verbindungsverfahren fest mit diesem verbunden ist.

Wegen möglicher Brandgefahr in Lagerhallen werden Roste, die in Plattenregalen oder Schwerlastregalen angeordnet sind, für die Lagerung von Gütern verwendet. Diese Roste, wie beispielsweise in der DE 80 14 894 U1 offenbart, weisen an ihren Längsseiten Profile auf, so daß sie auf Trägerbalken bzw. Holmen der Regale aufgenommen werden können. Zwischen den Längsseiten der Roste sind Längs- und Querstege angeordnet, auf denen die Güter gelagert werden. Durch die Ausgestaltung mit Längs- und Querstegen werden zudem Freiflächen gebildet, durch die im Falle eines Brandes Löschmedien (z.B. Löschwasser) von Sprinkleranlagen, die oftmals oberhalb der Roste angeordnet sind, durch die freien Flächen der Roste durchtreten können. Die Längs- und Querstege der Roste sind hierbei derart ausgestaltet, daß eine möglichst hohe Traglast der Roste erreicht wird und dennoch genügend Freiflächen für den Wasserdurchtritt gewährleitet werden können. Dementsprechend sind die Längsseiten und die Längs- und Querstege der vorbekannten Roste aus Stahlwerkstoffen hergestellt, die, um die gewünschte Stabilität und Traglast zu gewähren, nicht als Hohlkörper ausgebildet sind.

Nachteilig bei den oben beschriebenen Rosten ist, daß diese Roste, um hohe Traglasten zu gewähren, selbst ein hohes Eigengewicht aufweisen. Dementsprechend müssen die Plattenregale und Schwerlastregale derart konstruiert werden, daß sie neben den Gütern auch die Roste tragen können. Diese hochbeanspruchten Plattenregale und Schwerlastregale sind relativ teuer in der Anschaffung. Nachteilig ist weiterhin, daß hohe Materialkosten entstehen, um die gewünschte Traglast zu gewährleisten.

Die EP 1 559 346 A1 und die DE 88 08 144 U1 offenbaren deswegen Regalroste, die zwei Längsseiten und zwischen den Längsseiten angeordnete Querträger aufweisen, wobei die Längsseiten im Querschnitt als offenes U-Profil ausgebildet sind. Die offenen Seiten der Querträger sind zur Unterseite des Rostes ausgerichtet. Jeder dieser Querträger weist an jedem Ende Aussparungen auf, die mit den Längsseiten über Stützleisten lösbar koppelbar sind.

Aus der EP 1 457 618 A1 ist ein Gitterrost mit lang erstreckten Strukturbauteilen bekannt, wobei zumindest zwei einander gegenüber gelegene Endbereiche von Strukturbauteilen jeweils mit Haltekörpern in Verbindung stehen, die über auswärts greifende und zumindest eine Auflagefläche umfassende Bereiche an externen Widerlagern abstützbar sind, wobei Strukturbauteile mit in ihre stirnseitigen Enden hineinragenden Ausnehmungen versehen sind, die jeweils zumindest bereichsweise als im wesentlichen schlitzförmige Halteaufnahmen für ein in diese eingreifendes Halteglied eines Haltekörpers dienen, wobei der Abstand zwischen einander gegenüberliegenden und die Halteaufnahme begrenzenden Randkanten klein gegen die Längserstreckung des darin eingreifenden Halteglieds ist.

Die DE 20 2016 104 526 U1 beschreibt eine Tragstruktur mit einem Gitterrost, der auf zumindest zwei gegenüberliegenden Trägern auflegbar ist, wobei der Gitterrost Tragstäbe und in einem Winkel dazu angeordnete und mit diesen verbundene Füllstäbe aufweist, dadurch gekennzeichnet, dass zumindest ein Tragstab mit zumindest einem Einhängewinkel in Eingriff ist, der einen Schenkel aufweist, der auf einen Träger auflegbar ist.

Aus der DE 20 2009 015 918 U1 ist ein Regalboden-Grundträger für schwere Lasten bekannt, umfassend wenigstens zwei Querträger, die über eine Steckverbindung mit zwei spiegelbildlich zueinander ausgerichteten Auflagerprofilen zu verbinden sind, die jeweils wenigstens einen ersten horizontalen Profilschenkel zur Auflage auf einem Regalträger, einen vertikalen Profilschenkel und einen sich daran anschließenden zweiten horizontalen Profilabschnitt aufweisen.

Weiterhin werden von der Firma Gebr. Meiser GmbH U-Profil Regalroste angeboten, die zwei Längsseiten und zwischen den Längsseiten angeordneten Querträgern aufweisen, wobei die Längsseiten im Querschnitt als Profil ausgebildet sind, wobei das Profil wenigstens einen ersten Schenkel und einen im Wesentlichen rechtwinklig zum ersten Schenkel angeordneten zweiten Schenkel umfasst, wobei wenigstens zwei der Querträger im Querschnitt ein offenes Profil aufweisen, dessen offene Seite zur Unterseite des Rostes ausgerichtet ist, wobei jeder dieser Querträger an jedem Ende wenigstens eine Stanzung aufweist, wobei in jeder Stanzung der erste Schenkel des Profils angeordnet ist über einen stoffschlüssigen Fügeprozess, insbesondere ein Widerstandsschweißverfahren, fest mit diesem verbunden sind.

Der eingesetzte Schweißprozess bedarf jedoch einer stetigen Überwachung und Regulierung der Schweißparameter im Fügeprozess, da sich jede Veränderung der Beschaffenheit der Ausgangsmaterialien als Störgröße im Prozess und in der Qualität des Fertigungsergebnisses widerspiegelt. Insbesondere muss die Überwachung und Regulierung der Schweißparameter im Fügeprozess dann erfolgen, wenn sehr dünne, aber auch unterschiedlich dicke Materialstärken, sowie vorbeschichtete Werkstoffe miteinander stoffschlüssig gefügt werden müssen. Würde eine stetige Überwachung und Regulierung der Schweißparameter im Fügeprozess nicht stattfinden, könnte die Haltbarkeit der Schweißnaht im Gebrauch beeinträchtigt werden, was zum Versagen der Schweißnaht und damit zur Destabilisierung des Regalrostes führen könnte.

Der Erfindung liegt daher die Aufgabe zugrunde, einen Preßrost bereitzustellen, der leichter ist und günstiger bzw. weniger überwachungsintensiv in der Herstellung ist als der vorbekannte Stand der Technik, ohne die Baustabilität und Tragfähigkeit zu beeinträchtigen.

Die Aufgabe der Erfindung wird durch einen Preßrost gemäß dem Oberbegriff dadurch gelöst, daß durch das nachträgliche Einbringen von Verformungen jeweils rechts und links vom Querträger, bevorzugt unmittelbar neben demselben, in den ersten Schenkel des Profils der Längsseiten ein horizontales Verschieben der Bauteile gegeneinander verhindert ist, wodurch eine Fixierung der Steck- oder Pressverbindung des Querträgers mit dem Profil der Längsseiten erreicht wird.

Auf diese Weise läßt sich schnell und wirtschaftlich ein äußerst stabiler Preßrost fertigen.

Da mehrere dieser Roste als Fachböden in Plattenregalen oder Schwerlastregalen angeordnet werden, kann durch eine Gewichtsreduktion der Roste eine Kostenreduktion in der Regalkonstruktion erreicht werden, da diese, bei gleichbleibender Stabilität, weniger Last tragen müssen, wodurch die Materialkosten (zum Erreichen dieser Stabilität) für die Regale gesenkt werden können.

Da der Schenkel des Profils in der Stanzung des Querträgers eingesteckt oder eingepresst ist, wird eine Fixierung des Profils mit dem Querträger erreicht. Eine Sicherung gegen ein Verschieben der Bauteile (Profil und Querträger) gegeneinander, wird durch ein weiteres Verbindungsverfahren, nämlich ein form- und/oder kraftschlüssiges Verbindungsverfahren, erreicht, im Rahmen dessen die Verformung erfolgt.

Eine Prägung ist hierbei eine mit Druck, Tiefziehen oder Prägewerkzeug in den Schenkel eingebrachte Verformung.

Vorteilhafterweise ist die Verformung bzw. sind die Verformungen in unmittelbarer Nähe bzw. direkt neben der Steck- bzw. Pressverbindung des Querträgers mit dem Profil angeordnet. Es ist ebenfalls vorteilhaft vorgesehen, daß wenigstens zwei Verformungen in dem Profil beidseitig jeweils in der Nähe bzw. direkt neben der Steck- bzw. Pressverbindung angeordnet sind, so daß die Steck- bzw. Pressverbindung des Querträgers mit dem Profil beidseitig fixiert ist.

Eine bevorzugte Ausgestaltung der Erfindung sieht vor, daß das Profil als Z-Profil, als L-Profil oder als Mehrkantprofil ausgebildet ist, wobei das Z-Profil einen zum ersten Schenkel im Wesentlichen parallel angeordneten zweiten Schenkel umfasst, wobei das Verbindungsteil den ersten und den dritten Schenkel verbindet, das L-Profil einen ersten Schenkel und einen im Wesentlichen rechtwinklig zum ersten Schenkel angeordneten zweiten Schenkel umfasst und das Mehrkantprofil einen zum ersten Schenkel im Wesentlichen parallel angeordneten zweiten Schenkel, das den ersten und den zweiten Schenkel verbindende Verbindungsteil sowie einen zum Verbindungsteil im Wesentlichen parallel angeordneten dritten Schenkel umfasst, wobei der dritte Schenkel mit dem freien Ende des zweiten Schenkels verbunden ist.

Es ist zu der Erfindung gehörig, daß der Preßrost aus Stahl, vorzugsweise vorverzinktem Stahl, Edelstahl oder Aluminium besteht.

Hierbei kann vorteilhaft vorgesehen sein, daß der Rost aus Stahl besteht, wobei der Stahl ein vorverzinkter Stahl ist.

Eine weitere Ausgestaltung der Erfindung sieht vorteilhaft vor, daß die Oberflächen der Längsseiten und der Querträger mit einem Beschichtungsmaterial beschichtet sind, wobei das Beschichtungsmaterial die Oberflächen vor Korrosion schützt und/oder feuerabweisend wirkt.

Es liegt im Rahmen der Erfindung, daß das Verhältnis der Traglast des Preßrostes zu dem Eigengewicht des Preßrostes im Bereich von 10 bis 200 liegt.

Damit besitzt der erfindungsgemäße Rost eine Tragkraft, die das 10-fache bis 200-fache des Eigengewichts aufweist.

Weiterhin ist es bevorzugt, daß wenigstens 70 % der von dem Preßrost abgedeckten Fläche als freie Projektionsfläche ausgestaltet ist.

Diese Ausgestaltung ist insbesondere vorteilhaft, um im Falle eines Brandes den Abschattungseffekt des Rostes (der aus Querträgern und Längsseiten besteht) so gering wie möglich zu gestalten, so daß Löschmedien von Sprinkleranlagen durch die freien Projektionsflächen (Durchtrittsflächen) des Rostes durchtreten können.

Es ist vorteilhaft, daß wenigstens eine der Stanzungen am jeweiligen Ende eines Querträgers eine Einlaufkontur mit wenigstens einer Schikane aufweist, wodurch ein zentriertes Einführen und ein kraft- und/oder formschlüssiges Verbinden des ersten Schenkels des Profils mit dem Querträger ermöglicht wird.

Bei dieser Ausgestaltung der Erfindung ist es vorteilhaft, daß die wenigstens eine Stanzung am jeweiligen Ende des Querträgers keilförmig ausgebildet ist.

Im Rahmen der Erfindung liegt auch ein Verfahren zum Herstellen eines Preßrostes, insbesondere für die Verwendung als Fachboden für Plattenregale oder Schwerlastregale, mit zwei Längsseiten und zwischen den Längsseiten angeordneten Querträgern und Längsträgern, wobei die Querträger und die Längsträger ein I-förmiges Profil aufweisen, wobei die Längsträger in zur Oberseite des Preßrostes offenen Stanzungen der Querträger eingesteckt oder eingepresst werden, wobei die Längsträger und die Querträger zueinander rechtwinklig angeordnet werden, und wobei die Längsseiten im Querschnitt als Profil ausgebildet sind, wobei das Profil der Längsseiten wenigstens einen ersten Schenkel und ein im Wesentlichen rechtwinklig zum ersten Schenkel angeordneten zweiten Schenkel umfasst, wobei jeder der Querträger an jedem Ende eine Stanzung aufweist, in welcher der erste Schenkel des Profils der Längsseiten angeordnet wird und über ein Verbindungsverfahren fest mit diesem verbunden wird, wobei in einem ersten Schritt der erste Schenkel des Profils der Längsseiten in die Stanzung eingesteckt oder eingepresst wird, wodurch eine erste Verbindung des Profils der Längsseiten mit dem Querträger erreicht wird, und nachträgliche Verformungen jeweils rechts und links vom Querträger, bevorzugt unmittelbar neben demselben, in den ersten Schenkel des Profils der Längsseiten eingebracht werden, wodurch ein horizontales Verschieben der Bauteile gegeneinander verhindert wird, so daß eine Fixierung der Steck- oder Pressverbindung des Querträgers mit dem Profil der Längsseiten erreicht wird.

Nachfolgend werden Ausführungsbeispiele der Erfindung anhand von Zeichnungen näher, aber nicht darauf beschränkt, erläutert. Es zeigen
- Fig. 1: eine erste Variante des erfindungsgemäßen Preßrostes in perspektivischer Ansicht,
- Fig. 2: eine Detailansicht zu Fig. 1,
- Fig. 3: eine Seitenansicht des Querträgers,
- Fig. 4: eine Detailansicht zu Fig. 2,
- Fig. 5: das Profil in Seitenansicht,
- Fig. 6: den Preßrost in Seitenansicht,
- Fig. 7: eine Detailansicht zu Fig. 6,
- Fig. 8: eine zweite Variante des erfindungsgemäßen Preßrostes, bei der die nachträglich eingebrachten Verformungen nicht gezeigt sind, in perspektivischer Ansicht,
- Fig. 9: eine Detailansicht zu Fig. 8,
- Fig. 10: eine Seitenansicht des Querträgers,
- Fig. 11: eine Detailansicht zu Fig. 10,
- Fig. 12: das Profil in Seitenansicht.

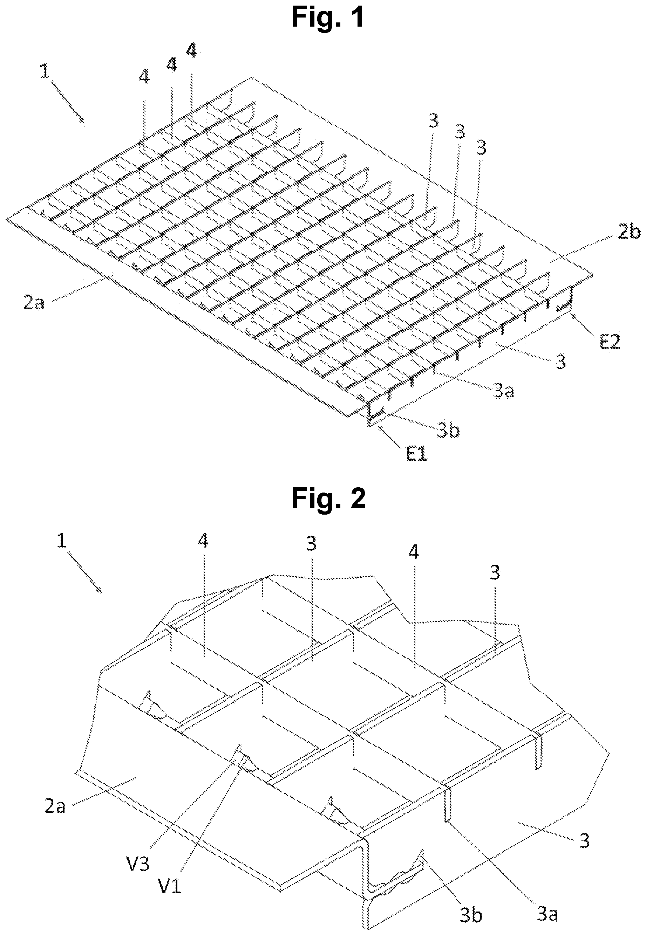

In den Fig. 1 bis 7 ist eine erste Variante des erfindungsgemäßen Rostes (1) mit zwei Längsseiten (2a, 2b) und zwischen den Längsseiten (2a, 2b) angeordneten Querträgern (3-) in perspektivischer Ansicht dargestellt. Die Längsseiten (2a, 2b) sind im Querschnitt als Z-Profil ausgebildet, wobei das Z-Profil einen ersten Schenkel (Z1), einen zum ersten Schenkel im Wesentlichen parallel angeordneten dritten Schenkel (Z2) umfasst, wobei der zweite Schenkel (Z3) den ersten und den dritten Schenkel verbindet. Die Querträger (3) weisen im Querschnitt ein I-förmiges Profil auf.

In Fig. 2 ist die Verbindung eines Querträgers (3) mit einer Längsseite (2a), die im Querschnitt als Z-Profil ausgebildet ist, in perspektivischer Ansicht vergrößert dargestellt. Wie dargestellt, ist der erste Schenkel (Z1) des Z-Profils an einem Ende (E1) des Querträgers in dessen Stanzungen (3b) eingesteckt bzw. eingepresst. Da der Querträger (3) im Querschnitt I-förmig ausgestaltet ist, weist der Querträger (3) an jedem Ende zwei Stanzungen (3b) auf. Die Stanzungen (3b) weisen vorzugsweise eine Schikane auf und/oder sind keilförmig ausgebildet. Durch das Einstecken oder Einpressen des ersten Schenkels (Z1) des Z-Profils in die Stanzungen (3b) des Querträgers (3) wird erreicht, daß eine Fixierung der Bauteile (Querträger und Längsseite) gegeneinander erfolgt. Durch das nachträgliche Einbringen von Verformungen (V1, V3) jeweils rechts und links vom Querträger (3), bevorzugt unmittelbar neben demselben, in den ersten Schenkel (Z1) des Profils wird zum einen ein horizontales Verschieben der Bauteile gegeneinander verhindert und weiterhin erreicht, daß durch das nachträgliche Verformen des ersten Schenkels (Z1) der erste Schenkel (Z1) im Bereich der Stanzung (3b) vertikal in der Stanzung (3b) verformt bzw. verkeilt wird. Letzteres verhindert ein Herausziehen des ersten Schenkels (Z1) aus den Stanzungen (3b) des Querträgers.

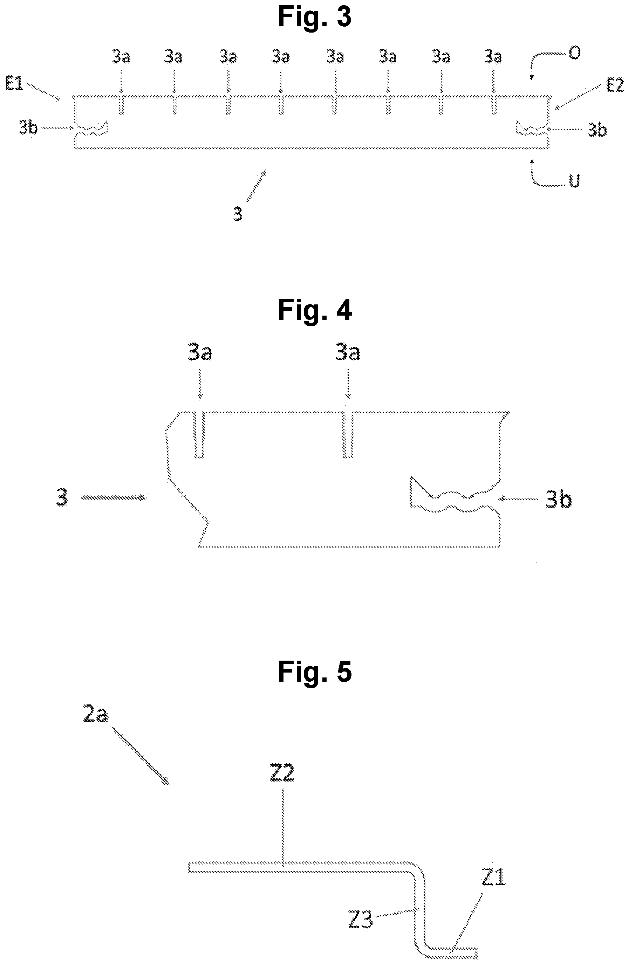

In Fig. 3 ist ein im Querschnitt I-förmiger Querträger, der an jedem Ende (E1, E2) wenigstens zwei Stanzungen (3b) aufweist, in perspektivischer Ansicht dargestellt. Es ist vorgesehen, daß wenigstens eine der Stanzungen (3b) an dem jeweiligen Ende (E1, E2) keilförmig ausgebildet ist.

Fig. 4 zeigt einen vergrößerten Ausschnitt des I-förmigen Querträgers (3) aus Fig. 3 mit einer schikanenförmigen Stanzung (3b) an dem vergrößerten Ende (E2).

Fig. 5 zeigt das Z-Profil in Seitenansicht mit dem ersten Schenkel (Z1) an dem einen Ende, dem dritten Schenkel (Z2) an dem anderen Ende und dem diese verbindenden zweiten Schenkel (Z3).

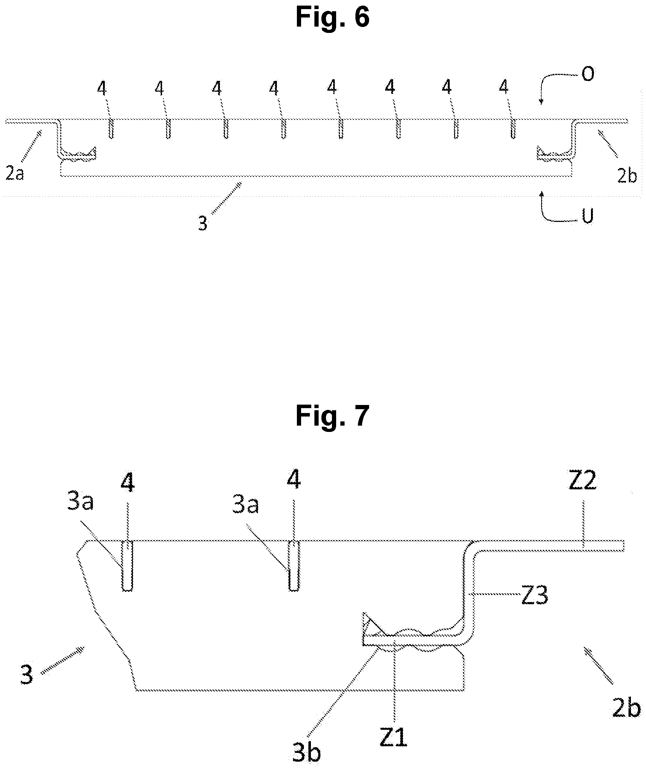

In Fig. 6 ist der Preßrost in Seitenansicht dargestellt. Es ist zu erkennen, daß das Z-Profil (2a, 2b)) mit seinem ersten Schenkel (Z1) in der Stanzung angeordnet und dort festgelegt ist. Die Verformungen (V) können sowohl (zeitlich) vor als auch nach dem Verbinden mit dem Querträger in die Längsseite eingebracht sein.

Fig. 7 zeigt einen vergrößerten Ausschnitt der als Z-Profil ausgebildeten Längsseite (2b) aus Fig. 6.

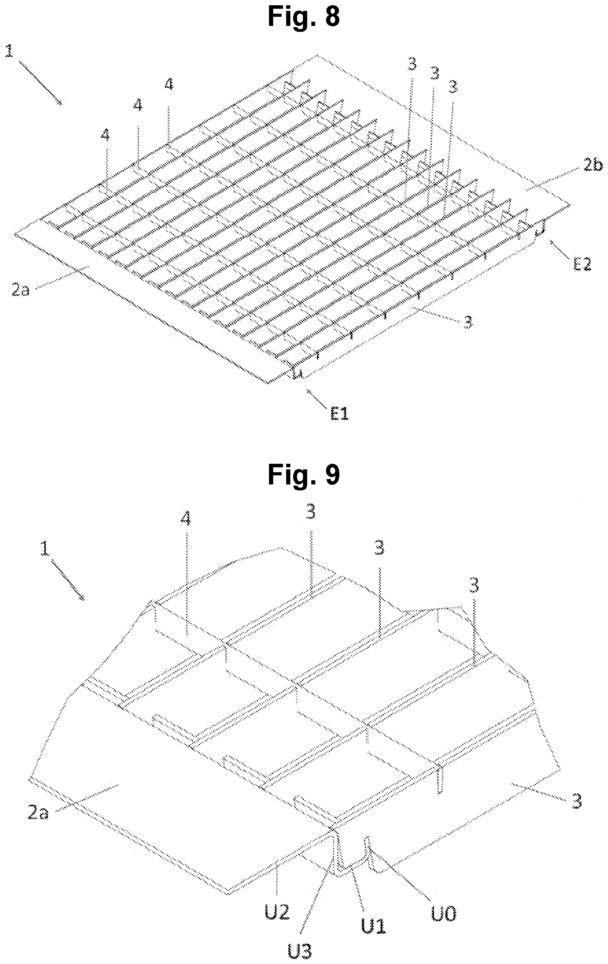

In den Fig. 8 bis 12 ist eine zweite Variante der Erfindung dargestellt, bei der die nachträglich eingebrachten Verformungen nicht gezeigt sind. Bei dieser Variante sind die Längsseiten (2a, 2b) im Querschnitt als Mehrkant-Profil (U0-U3) ausgebildet, wobei das Mehrkantprofil (U0-U3) einen zum ersten Schenkel (U0) im Wesentlichen parallel angeordneten zweiten Schenkel (U3), ein den ersten und den zweiten Schenkel verbindendes Verbindungsteil (U1) sowie einen zum Verbindungsteil (U1) im Wesentlichen parallel angeordneten dritten Schenkel (U2) umfasst, wobei der dritte Schenkel (U2) mit dem freien Ende des zweiten Schenkels verbunden ist. An beiden Enden (E1, E2) des Querträgers (3) sind Stanzungen (3b) vorgesehen, in denen der erste Schenkel (U0) des Mehrkant-Profils (U0-U3) angeordnet wird. Die Stanzungen (3b) sind, wie dargestellt, als im Wesentlichen vertikale Einschnitte, die sich von der Unterseite des Querträgers (3) in Richtung zu dessen Oberseite erstrecken.

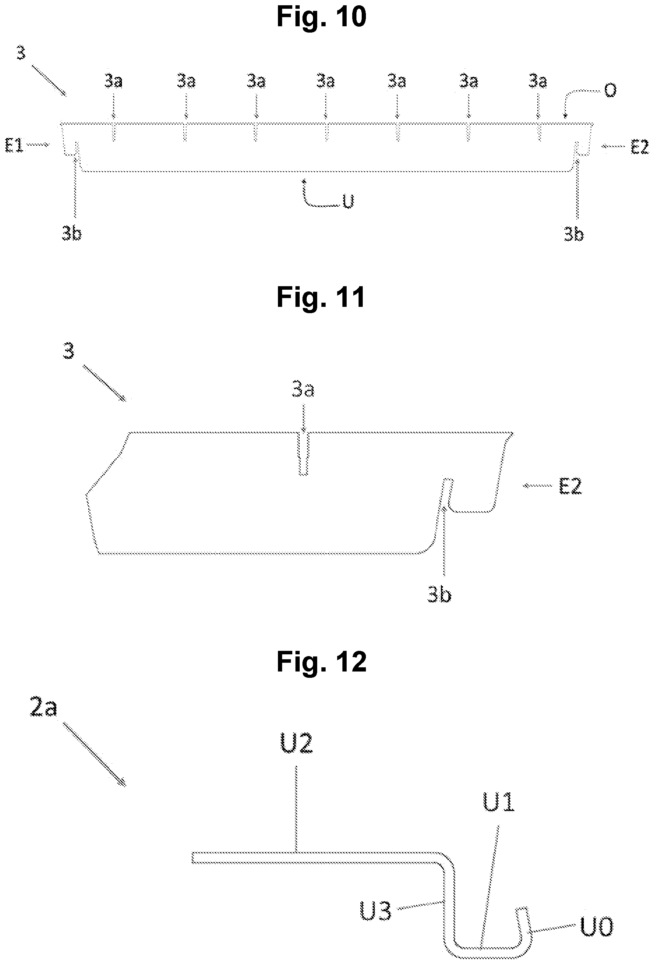

In Fig. 11 ist eine Detailansicht des Querträgers (3) aus Fig. 10 dargestellt.

Fig. 12 zeigt das Mehrkant-Profil in Seitenansicht mit dem ersten Schenkel (U0), dem dazu im Wesentlichen parallelen zweiten Schenkel (U3), dem diese verbindenden Verbindungsteil (U1), zu dem wiederum der dritte Schenkel (U2) parallel verläuft.

Hinsichtlich weiterer, in den Figuren nicht gezeigter Merkmale wird auf den allgemeinen Teil der Beschreibung verwiesen.

### Bezugszeichenliste

- 1: Rost
- 2a, 2b: Längsseiten
- 3: Querträger
- 3a: zur Oberseite des Querträgers offene Stanzungen
- 3b: Stanzungen am Ende des Querträgers
- 4: Längsträger
- Z1: erster Schenkel
- Z2: dritter Schenkel
- Z3: zweiter Schenkel
- V1, V2: Verformungen
- E1, E2: Ende des Querträgers
- U0-U3: Mehrkantprofil
- UO: erster Schenkel
- U1: Verbindungsteil
- U2: dritter Schenkel
- U3: zweiter Schenkel

## Patentansprüche

1. Preßrost (1), insbesondere für die Verwendung als Fachboden für Plattenregale oder Schwerlastregale, mit zwei Längsseiten (2a, 2b) und zwischen den Längsseiten (2a, 2b) angeordneten Querträgern (3) und Längsträgern (4), wobei die Querträger (3) und die Längsträger (4) ein I-förmiges Profil aufweisen, wobei die Längsträger (4) in zur Oberseite des Preßrostes (1) offenen Stanzungen (3a) der Querträger eingesteckt oder eingepresst sind, wobei die Längsträger (4) und die Querträger (3) zueinander rechtwinklig angeordnet sind, und wobei die Längsseiten (2a, 2b) im Querschnitt als Profil (Z1-Z3; U0-U3) ausgebildet sind, wobei das Profil (Z1-Z3; U0-U3) der Längsseiten (2a, 2b) wenigstens einen ersten Schenkel (Z1; U0) und einen im Wesentlichen rechtwinklig zum ersten Schenkel (Z1; U0) angeordneten zweiten Schenkel (Z3; U3 ) umfasst, wobei jeder der Querträger (3) an jedem Ende (E1, E2) eine Stanzung (3b) aufweist, in welcher der erste Schenkel (Z1; U0) des Profils (Z1-Z3; U0-U3) angeordnet ist und über ein Verbindungsverfahren fest mit diesem verbunden ist, wobei der erste Schenkel (Z1; U0) des Profils (Z1-Z3; U0-U3) der Längsseiten (2a, 2b) in die Stanzung (3b) eingesteckt oder eingepresst ist, wodurch eine erste Verbindung des Profils (Z1-Z3; U0-U3) der Längsseiten (2a, 2b) mit dem Querträger erreicht wird, **dadurch gekennzeichnet, daß** durch das nachträgliche Einbringen von Verformungen (V1, V3) jeweils rechts und links vom Querträger, bevorzugt unmittelbar neben demselben, in den ersten Schenkel (Z1, U0) des Profils (Z1-Z3; U0-U3) der Längsseiten (2a, 2b) ein horizontales Verschieben der Bauteile gegeneinander verhindert ist, wodurch eine Fixierung der Steck- oder Pressverbindung des Querträgers mit dem Profil (Z1-Z3; U0-U3) der Längsseiten (2a, 2b) erreicht wird.

2. Preßrost (1) gemäß Anspruch 1, **dadurch gekennzeichnet, daß** das Profil (Z1-Z3; U0-U3) der Längsseiten (2a, 2b) als Z-Profil (Z1-Z3), als L-Profil oder als Mehrkantprofil (U0-U3) ausgebildet ist, wobei das Z-Profil einen zum ersten Schenkel (Z1) im Wesentlichen parallel angeordneten dritten Schenkel (Z2) umfasst, wobei der zweite Schenkel (Z3) den ersten Schenkel (Z1) und den dritten Schenkel (Z2) verbindet, das L-Profil einen ersten Schenkel und einen im Wesentlichen rechtwinklig zum ersten Schenkel angeordneten zweiten Schenkel umfasst und das Mehrkantprofil (U0-U3) einen zum ersten Schenkel (U0) im Wesentlichen parallel angeordneten zweiten Schenkel (U3), ein den ersten und den zweiten Schenkel verbindendes Verbindungsteil (U1) sowie einen zum Verbindungsteil (U1) im Wesentlichen parallel angeordneten dritten Schenkel (U2) umfasst, wobei der dritte Schenkel (U2) mit dem freien Ende des zweiten Schenkels (U3) verbunden ist.

3. Preßrost (1) gemäß einem der vorhergehenden Ansprüche, **dadurch gekennzeichnet, daß** der Preßrost (1) aus Stahl, vorzugsweise vorverzinktem Stahl, Edelstahl oder Aluminium besteht.

4. Preßrost (1) gemäß einem der vorhergehenden Ansprüche, **dadurch gekennzeichnet, daß** das Verhältnis der Traglast des Preßrostes (1) zu dem Eigengewicht des Preßrostes (1) im Bereich von 10 bis 200 liegt.

5. Preßrost (1) gemäß einem der vorhergehenden Ansprüche, **dadurch gekennzeichnet, daß** wenigstens 70 % der von dem Preßrost (1) abgedeckten Fläche als freie Projektionsfläche ausgestaltet ist.

6. Preßrost (1) gemäß Anspruch 1, **dadurch gekennzeichnet, daß** wenigstens eine der Stanzungen (3b) am jeweiligen Ende (E1; E2) eines Querträgers eine Einlaufkontur mit wenigstens einer Schikane aufweist, wodurch ein zentriertes Einführen und ein kraft- und/oder formschlüssiges Verbinden des ersten Schenkels (Z1; U0) des Profils (Z1-Z3; U0-U3) mit dem Querträger ermöglicht wird.

7. Preßrost (1) gemäß Anspruch 6, **dadurch gekennzeichnet, daß** die wenigstens eine Stanzung (3b) am jeweiligen Ende (E1; E2) des Querträgers keilförmig ausgebildet ist.

8. Verfahren zum Herstellen eines Preßrostes (1), insbesondere für die Verwendung als Fachboden für Plattenregale oder Schwerlastregale, mit zwei Längsseiten (2a, 2b) und zwischen den Längsseiten (2a, 2b) angeordneten Querträgern (3) und Längsträgern (4), wobei die Querträger (3) und die Längsträger (4) ein I-förmiges Profil aufweisen, wobei die Längsträger (4) in zur Oberseite des Preßrostes (1) offenen Stanzungen (3a) der Querträger eingesteckt oder eingepresst werden, wobei die Längsträger (4) und die Querträger (3) zueinander rechtwinklig angeordnet werden, und wobei die Längsseiten (2a, 2b) im Querschnitt als Profil (Z1-Z3; U0-U3) ausgebildet sind, wobei das Profil (Z1-Z3; U0-U3) der Längsseiten (2a, 2b) wenigstens einen ersten Schenkel (Z1; U0) und einen im Wesentlichen rechtwinklig zum ersten Schenkel (Z1; U0) angeordneten zweiten Schenkel (Z3; U3 ) umfasst, wobei jeder der Querträger (3) an jedem Ende (E1, E2) eine Stanzung (3b) aufweist, in welcher der erste Schenkel (Z1; U0) des Profils (Z1-Z3; U0-U3) angeordnet wird und über ein Verbindungsverfahren fest mit diesem verbunden wird, wobei in einem ersten Schritt der erste Schenkel (Z1; U0) des Profils (Z1-Z3; U0-U3) der Längsseiten (2a, 2b) in die Stanzung (3b) eingesteckt oder eingepresst wird, wodurch eine erste Verbindung des Profils (Z1-Z3; U0-U3) der Längsseiten (2a, 2b) mit dem Querträger (3) erreicht wird, **dadurch gekennzeichnet, daß** nachträgliche Verformungen (V1, V3) jeweils rechts und links vom Querträger (3), bevorzugt unmittelbar neben demselben, in den ersten Schenkel (Z1; U0) des Profils (Z1-Z3; U0-U3) der Längsseiten (2a, 2b) eingebracht werden, wodurch ein horizontales Verschieben der Bauteile gegeneinander verhindert wird, so daß eine Fixierung der Steck- oder Pressverbindung des Querträgers mit dem Profil (Z1-Z3; U0-U3) der Längsseiten (2a, 2b) erreicht wird.

## Claims

1. Press locked grating (1), in particular for use as a shelf for plate shelves or heavy-duty shelves, with two longitudinal sides (2a, 2b) and cross members (3) and longitudinal members (4) arranged between the longitudinal sides (2a, 2b), the cross members (3) and the longitudinal members (4) having an I-shaped profile, the longitudinal members (4) being inserted or pressed into punched holes (3a) of the cross members which are open towards the upper side of the press locked grating (1), wherein the longitudinal members (4) and the cross members (3) are arranged at right angles to one another, and wherein the longitudinal sides (2a, 2b) are formed in cross-section as a profile (Z1-Z3; U0-U3), wherein the profile (Z1-Z3; U0-U3) of the longitudinal sides (2a, 2b) comprises at least a first leg (Z1; U0) and a second leg (Z3; U3) arranged substantially at right angles to the first leg (Z1; U0), wherein each of the cross members (3) has a punched hole (4c) at each end, in which the first leg (Z1; U0) of the profile (Z1-Z3; U0-U3) is arranged and is firmly connected thereto by a connecting method, the first leg (Z1; U0) of the profile (Z1-Z3; U0-U3) of the longitudinal sides (2a, 2b) is inserted or pressed into the punched hole (3b), whereby a first connection of the profile (Z1-Z3; U0-U3) of the longitudinal sides (2a, 2b) with the cross member is achieved, **characterized in that** by the subsequent introduction of deformations (V1, V3) to the right and left of the cross member, preferably immediately adjacent to it, in the first leg (Z1, U0) of the profile (Z1-Z3; U0-U3) of the longitudinal sides (2a, 2b), a horizontal displacement of the components against each other is prevented, thus achieving a fixing of the plug-in or press connection of the cross member with the profile (Z1-Z3; U0-U3)of the longitudinal sides (2a, 2b).

2. Press locked grating (1) according to claim 1, **characterized in that** the profile (Z1-Z3; U0-U3) of the longitudinal sides (2a, 2b) is designed as a Z-profile, a L-profile or a polygonal profile (U0-U3), the Z-profile comprising a third leg (Z2) arranged substantially parallel to the first leg (Z1) and a second leg connecting the first and second legs, the L-profile comprises a first leg and a second leg (Z3) arranged substantially perpendicular to the first leg, and the polygonal profile (U0-U3) comprises a second leg (U3) arranged substantially parallel to the first leg (U0), a connecting part (U1) connecting the first and second legs, and a third leg (U2) arranged substantially parallel to the connecting part (U1), the third leg(U2) being connected to the free end of the second leg.

3. Press locked grating (1) according to one of the preceding claims, **characterized in that** the press locked grating (1) consists of steel, preferably pre-galvanized steel, stainless steel or aluminium.

4. Press locked grating (1) according to one of the preceding claims, **characterized in that** the ratio of the bearing load of the press locked grating (1) to the dead weight of the press locked grating (1) is in the range of 10 to 200.

5. Press locked grating (1) according to one of the preceding claims, **characterized in that** at least 70 % of the area covered by the press locked grating (1) is a free projection area.

6. Press locked grating (1) according to claim 1, **characterized in that** at least one of the punched holes (3b) at the respective end (E1; E2) of a cross member has an inlet contour with at least one baffle, thus enabling a centred insertion and a force- and/or form-fit connection of the first leg (Z1; U0) of the profile (Z1-Z3; U0-U3) with the cross member.

7. Press locked grating (1) according to claim 6, **characterized in that** the at least one punched hole (3b) at the respective end (E1; E2) of the cross member is wedge-shaped.

8. Method of manufacturing a press locked grating (1) , in particular for use as a shelf for plate shelves or heavy-duty shelves, with two longitudinal sides (2a; 2b) and cross members (3) and longitudinal members (4) arranged between the longitudinal sides (2a, 2b), wherein the cross members (3) and the longitudinal members (4) have an I-shaped profile, wherein the longitudinal members (4) are inserted or pressed into punched holes (3a) of the cross members which are open towards the upper side of the press locked grating (1), wherein the longitudinal members (4) and the cross members (3) are arranged at right angles to each other, and wherein the longitudinal sides (2a, 2b) are formed in cross-section as a profile(Z1-Z3; U0-U3), wherein the profile (Z1-Z3; U0-U3) of the longitudinal sides (2a, 2b) comprises at least a first leg (Z1; U0) and a second leg (Z3; U3) arranged substantially at right angles to the first leg (Z1; U0), wherein each of the cross members (3) has at each end (E1, E2) a punched hole (4c) in which the first leg (Z1; U0) of the profile (Z1-Z3; U0-U3) is arranged and is firmly connected thereto by a connecting method, wherein in a first step the first leg (Z1; U0) of the profile (Z1-Z3; U0-U3) of the longitudinal sides (2a, 2b) is inserted or pressed into the punched hole (3b), whereby a first connection of the profile (Z1-Z3; U0-U3) of the longitudinal sides (2a, 2b) with the cross member is achieved, **characterized in that** subsequent deformations (V1, V3) to the right and left of the cross member, preferably immediately adjacent to it, in the first leg (Z1) of the profile (Z1-Z3; U0-U3) of the longitudinal sides (2a, 2b), thus preventing horizontal displacement of the components in relation to each other, so that the plug-in or press connection of the cross member with the profile (Z1-Z3; U0-U3) of the longitudinal sides (2a, 2b) is fixed.

## Revendications

1. Caillebotis pressé (1), en particulier pour une utilisation comme étagère pour des rayonnages à panneaux ou des rayonnages pour charges lourdes, avec deux côtés longitudinaux (2a, 2b) et, disposés entre les côtés longitudinaux (2a, 2b), des traverses (3) et des longerons (4), les traverses (3) et les longerons (4) ayant un profil en forme de I, les longerons (4) étant insérés ou pressés dans des encoches (3a) des traverses qui sont ouvertes vers la face supérieure du caillebotis pressé (1), les longerons (4) et les traverses (3) étant disposés à angle droit les uns par rapport aux autres, et les côtés longitudinaux (2a, 2b) ayant en section transversale la forme d'un profilé (Z1-Z3 ; U0-U3), le profilé (Z1-Z3 ; U0-U3) des côtés longitudinaux (2a, 2b) comprenant au moins une première branche (Z1 ; U0) et une deuxième branche (Z3 ; U3) disposée de façon sensiblement perpendiculaire à la première branche (Z1 ; U0), chacune des traverses (3) étant munie à chaque extrémité (E1, E2) d'une encoche (3b) dans laquelle la première branche (Z1 ; U0) du profilé (Z1-Z3 ; U0-U3) est disposée et reliée fermement à celle-ci par un procédé de liaison, la première branche (Z1 ; U0) du profilé (Z1-Z3 ; U0-U3) des côtés longitudinaux (2a, 2b) étant insérée ou pressée dans l'encoche (3b), ce qui permet une première liaison du profilé (Z1-Z3 ; U0-U3) des côtés longitudinaux (2a, 2b) avec la traverse, **caractérisé en ce qu'**un déplacement horizontal des composants les uns par rapport aux autres est empêché par la réalisation ultérieure de déformations (V1, V3) dans la première branche (Z1, U0) du profilé (Z1-Z3 ; U0-U3) des côtés longitudinaux (2a, 2b), respectivement à droite et à gauche de la traverse, de préférence directement à côté de celle-ci, ce qui permet d'obtenir une fixation de la liaison par insertion ou par pression de la traverse avec le profilé (Z1-Z3 ; U0-U3) des côtés longitudinaux (2a, 2b).

2. Caillebotis pressé (1) selon la revendication 1, **caractérisé en ce que** le profilé (Z1-Z3 ; U0-U3) des côtés longitudinaux (2a, 2b) est réalisé sous la forme d'un profilé en Z (Z1-Z3), d'un profilé en L ou d'un profilé polygonal (U0-U3), le profilé en Z comprenant une troisième branche (Z2) disposée de façon sensiblement parallèle à la première branche (Z1), la deuxième branche (Z3) reliant la première branche (Z1) et la troisième branche (Z2), le profilé en L comprenant une première branche et une deuxième branche disposée sensiblement à angle droit par rapport à la première branche, et le profilé polygonal (U0-U3) comprenant une deuxième branche (U3) disposée de façon sensiblement parallèle à la première branche (U0), une pièce de liaison (U1 ) reliant la première et la deuxième branche, ainsi qu'une troisième branche (U2) disposée de façon sensiblement parallèle à la pièce de liaison (U1), la troisième branche (U2) étant reliée à l'extrémité libre de la deuxième branche (U3).

3. Caillebotis pressé (1) selon l'une des revendications précédentes, **caractérisé en ce que** le caillebotis pressé (1) est en acier, de préférence en acier pré-galvanisé, en acier inoxydable ou en aluminium.

4. Caillebotis pressé (1) selon l'une des revendications précédentes, **caractérisé en ce que** le rapport entre la charge utile du caillebotis pressé (1) et le poids propre du caillebotis pressé (1) est compris entre 10 et 200.

5. Caillebotis pressé (1) selon l'une des revendications précédentes, **caractérisé en ce qu'**au moins 70 % de la surface recouverte par le caillebotis pressé (1) est conçue comme surface de projection libre.

6. Caillebotis pressé (1) selon la revendication 1, **caractérisé en ce qu'**au moins l'une des encoches (3b) à l'extrémité correspondante (E1 ; E2) d'une traverse est munie d'un contour d'entrée avec au moins une chicane, ce qui permet une introduction centrée et une liaison par force et/ou par forme de la première branche (Z1 ; U0) du profilé (Z1-Z3 ; U0-U3) avec la traverse.

7. Caillebotis pressé (1) selon la revendication 6, **caractérisé en ce que** ladite au moins une encoche (3b) est réalisée en forme de coin à l'extrémité correspondante (E1 ; E2) de la traverse.

8. Procédé de fabrication d'un caillebotis pressé (1), en particulier pour une utilisation comme étagère pour des rayonnages à panneaux ou des rayonnages pour charges lourdes, avec deux côtés longitudinaux (2a, 2b) et, disposés entre les côtés longitudinaux (2a, 2b), des traverses (3) et des longerons (4), les traverses (3) et les longerons (4) ayant un profil en forme de I, les longerons (4) étant insérés ou pressés dans des encoches (3a) des traverses qui sont ouvertes vers la face supérieure du caillebotis pressé (1), les longerons (4) et les traverses (3) étant disposés à angle droit les uns par rapport aux autres, et les côtés longitudinaux (2a, 2b) ayant en section transversale la forme d'un profilé (Z1-Z3 ; U0-U3), le profilé (Z1-Z3 ; U0-U3) des côtés longitudinaux (2a, 2b) comprenant au moins une première branche (Z1 ; U0) et une deuxième branche (Z3 ; U3) disposée de façon sensiblement perpendiculaire à la première branche (Z1 ; U0), chacune des traverses (3) étant munie à chaque extrémité (E1, E2) d'une encoche (3b) dans laquelle la première branche (Z1 ; U0) du profilé (Z1-Z3 ; U0-U3) est disposée et reliée fermement à celle-ci par un procédé de liaison, procédé dans lequel, dans une première étape, la première branche (Z1 ; U0) du profilé (Z1-Z3 ; U0-U3) des côtés longitudinaux (2a, 2b) est insérée ou pressée dans l'encoche (3b), ce qui permet de réaliser une première liaison du profilé (Z1-Z3 ; U0-U3) des côtés longitudinaux (2a, 2b) avec la traverse (3), **caractérisé en ce que** des déformations ultérieures (V1, V3) sont réalisées respectivement à droite et à gauche de la traverse (3), de préférence directement à côté de celle-ci, dans la première branche (Z1, U0) du profilé (Z1-Z3 ; U0-U3) des côtés longitudinaux (2a, 2b), ce qui empêche un déplacement horizontal des composants les uns par rapport aux autres, de sorte qu'on obtient une fixation de l'assemblage par insertion ou par pression de la traverse avec le profilé (Z1-Z3 ; U0-U3) des côtés longitudinaux (2a, 2b).
